# Europäisches Patentamt
# European Patent Office
# Office européen des brevets

(19)

(11) Veröffentlichungsnummer: **0 171 557**
**B1**

(12) # EUROPÄISCHE PATENTSCHRIFT

(45) Veröffentlichungstag der Patentschrift:
31.08.88

(51) Int. Cl.⁴: **B 65 G 43/10**

(21) Anmeldenummer: **85107903.8**

(22) Anmeldetag: **26.06.85**

(54) Schaltsystem zum selbsttätigen Zu- und Abschalten von mehreren, hintereinandergeschalteten Förderern.

(30) Priorität: **16.08.84 DE 3430061**

(43) Veröffentlichungstag der Anmeldung:
**19.02.86 Patentblatt 86/8**

(45) Bekanntmachung des Hinweises auf die Patenterteilung:
**31.08.88 Patentblatt 88/35**

(84) Benannte Vertragsstaaten:
**AT BE DE FR IT NL**

(56) Entgegenhaltungen:
**DE-B-2 623 449**
**DE-C-3 035 930**

(73) Patentinhaber: **Klöckner- Humboldt- Deutz Aktiengesellschaft, Deutz- Mülheimer- Strasse 111 Postfach 80 05 09, D-5000 Köln 80 (DE)**

(72) Erfinder: **Jordan, Günther, Annastrasse 14a, D-4354 Datteln (DE)**

(74) Vertreter: **Beisner, Klaus, Dipl.- Ing., c/o KHD Humboldt Wedag AG Patente und Lizenzen Wiersbergstrasse Postfach 91 04 57, D-5000 Köln 91 (DE)**

EP 0 171 557 B1

**Beschreibung**

Die Erfindung betrifft ein Schaltsystem zum selbsttätigen Zu- und Abschalten von mehreren hintereinandergeschalteten, einen Förderstrang bildenden Förderorganen, insbesondere Bunkerabzugsrinnen, die mit materialflußüberwachenden Signalgebern ausgerüstet sind, die mit untereinanderverknüpften den jeweiligen Förderorganen zugeordneten Verriegelungsschaltungen verbunden sind, die im wesentlichen aus binären Elementargliedern bestehen.

Aus der DE-PS-3 035 930 ist ein Bunkeraustragssystem mit drei hintereinandergeschalteten Schwingförderrinnen als Bunkerabzugsrinnen bekannt, die einen Förderstrang bilden und mit materialflußüberwachenden Signalgebern ausgerüstet sind, die aus Bunker-Füllstands-Meßvorrichtungen bestehen. Die Regelung eines solchen Systems hintereinandergeschalteter Förderorgane zur Aufrechterhaltung einer kontinuierlichen Materialförderung macht es erforderlich, die von den Signalgebern ausgehenden Signale logisch so zu verknüpfen, daß die einzelnen Förderorgane aufgrund materialflußabhängiger Parameter, beispielsweise einer bestimmten Füllstandshöhe des Fördergutes auf dem Förderorgan, ein- oder ausgeschaltet werden.

Die Regelung erfolgt hierbei in der Mehrzahl der Fälle in konventioneller Relaistechnik über einzelne, mechanisch wirkende Schaltrelais. Die Verwendung einzelner mechanischer Schaltrelais erfordert jedoch einen verhältnismäßig großen Aufwand bei der manuellen Verdrahtung der Relais. Die Relais müssen außerdem in eigens dafür gefertigten Schaltschränken untergebracht werden. Weiterhin unterliegen die mechanischen Kontakte der Relais dem Verschleiß, was zu Schaltstörungen führen kann.

Aus der DE-B-2 623 449 ist ein Steuer- und Verriegelungssystem für die Vorwahl und den Anlauf von Förderbändern und deren Zuordnung zu Förderstrecken einer Bandförderanlage bekannt, deren Schaltungsaufbau in drei Funktionsebenen derart ausgestaltet ist, daß eine erste Eingabeebene über Tastschalter Signale empfängt, die einer zweiten Speicherebene aufgeschaltet werden und daß dieser Speicherebene eine dritte Verriegelungsebene nachgeschaltet ist, die im wesentlichen aus binären Elementargliedern besteht. Diese Veröffentlichung enthält keinen Hinweis auf einen speziellen Aufbau oder eine spezielle Schaltung der einzelnen elektronisch wirkenden Elementarglieder.

Der Erfindung liegt die Aufgabe zugrunde, ein Schaltsystem der eingangs genannten Gattung so auszulegen, das Fehlschaltungen vermieden werden und individuell einstellbare, stabile Ein- und Ausschaltvorgänge an den Förderorganen gewährleistet sind.

Die Aufgabe wird dadurch gelöst, daß der dem jeweiligen Förderorgan zuogeordnete Signalgeber mit einer Signal formungsstufe der jeweiligen Verriegelungsschaltung verbunden ist, wobei einer Signalformungsstufe eine Zeitstufe nachgeschaltet ist, die ihrerseits wiederum über eine Logikstufe mit einer Signalverknüpfungsstufe verbunden ist, die über eine Verstärkerstufe mit dem Schaltrelais des jeweiligen Förderorgans und mit der Signalverknüpfungsstufe der Verriegelungsschaltung des jeweils zu und abfördernden Förderorgans in Verbindung steht.

Das erfindungsgemäße System bietet den Vorteil, daß mit der beanspruchten Verschaltung von elektrischen Einheiten das gesamte Schaltsystem standardisiert werden kann, wobei die von dem System verarbeiteten Signale stabilisiert sind, individuell eingestellt bzw. verzögert werden können und das Signal zum Zu- oder Abschalten eines Förderorgans mit großer Zuverlässigkeit dem jeweiligen Schaltrelais aufgeschaltet werden kann. Auf diese Weise ist mit geringem Material- und Kostenaufwand eine kontinuierliche Materialförderung auf mehreren hintereinandergeschalteten Förderorganen durch jeweiliges Zu- und Abschalten einzelner Förderorgane aufrechtzuhalten. Auch kann das erfindungsgemäße Schaltsystem gegenüber der herkömmlichen Relaisschaltung durch den Einsatz von binären Elementargliedern kleiner gebaut werden, und es ist kein großer Schaltschrank erforderlich, sondern das Schaltsystem kann auf Platinen kleiner Bauweise untergebracht werden.

Gemäß einer weiteren vorteilhaften Ausgestaltung der Erfindung besteht das Schaltsystem aus wenigstens zwei, vorzugsweise drei miteinander verknüpften Verriegelungsschaltungen. Dadurch ist es möglich, das Schaltsystem für beliebig viele Förderorgane gleichzeitig komplett in einem Gehäuse zusammenzufassen. Die aufwendige Verdrahtung der einzelnen Elemente miteinander entfällt, und es ist kein besonderer Schaltschrank erforderlich. Die Signalgeber und die Förderorgane müssen nur noch mit den jeweiligen Anschlüssen des erfindungsgemäßen Schaltsystems verbunden werden.

Gemäß einer weiteren Ausgestaltung der Erfindung sind die binären Elementarglieder des Schaltsystems NAND- und NOT-Glieder. Sie ermöglichen jede gewünschte Signalverknüpfung entsprechend der booleschen Schaltalgebra.

Nachfolgend wird das Schaltsystem gemäß der Erfindung anhand von Schaltplänen näher erläutert.

Fig. 1 zeigt den Aufbau eines Schaltsystems für drei Förderorgane.

Fig. 2 zeigt den Innenschaltplan eines Schaltsystems gemäß Fig. 1.

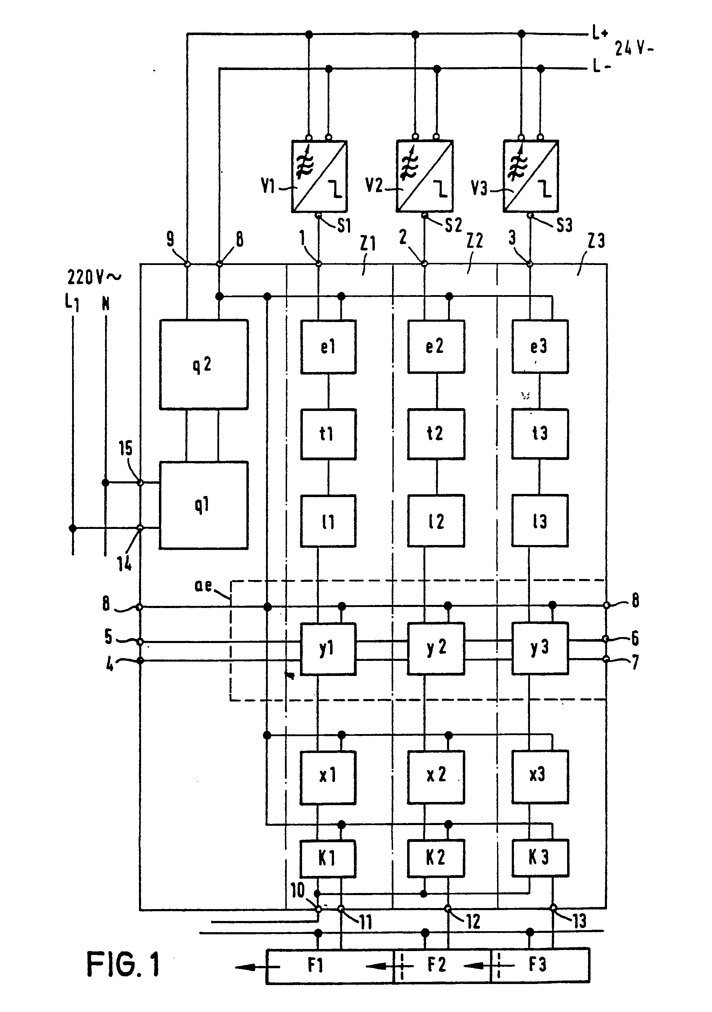

In Fig. 1 ist ein erfindungsgemäßes Schaltsystem für drei Förderorgane durch eine Umrahmung kenntlich gemacht. Die Anschlußklemmen sind mit Ziffern 1 bis 15 benannt. Wie ersichtlich, besteht das Schaltsystem aus drei gleich aufgebauten Verriegelungsschaltungen Z1, Z2, Z3, die den jeweiligen Förderorganen F1, F2, F3 mit ihren Signalgebern V1, V2, V3 zugeordnet sind. Die Buchstaben-Zahlen- Kombinationen bezeichnen die einzelnen Stufen der jeweiligen Verriegelungsschaltungen Z1, Z2, Z3.

Das Schaltsystem ist über die Klemmen 14 und 15 an eine 220 Volt-Wechselspannung L1, N angeschlossen. In dem nicht näher erläuterten Block q1 wird in bekannter Weise die Spannung L1, N transformiert, gleichgerichtet und stabilisiert. Über Block q2 erfolgt die Gleichspannungsversorgung des Schaltsystems sowie über die Klemmen 8 und 9 die Versorgung der Signalgeber V1, V2, V3 mit 24 Volt- Gleichspannung L+, L-.

Die Signalgeber V1, V2, V3 sind induktive Näherungsschalter, mit denen die Füllstandshöhe auf den Förderorganen F1, F2, F3 festgestellt wird. Die Signalgeber können auch Endschalter, Füllstandsmesser nach dem Echolot-Prinzip oder andere geeignete Vorrichtungen zur Ermittlung der Füllstandshöhe sein. Die von den Signalgebern V1, V2, V3 erzeugten Signale S1, S2, S3 liegen jeweils an den Klemmen 1, 2, 3 der den jeweiligen Förderorganen F1, F2, F3 zugeordneten Verriegelungsschaltungen Z1, Z2, Z3.

Die Verriegelungsschaltungen Z1, Z2, Z3 bestehen jeweils aus folgenden hintereinandergeschalteten Stufen: Signalformungsstufe e1, e2, e3, Zeitstufe t1, t2, t3, Logikstufe 1 1, 1 2, 1 3, Signalverknüpfungsstufe y1, y2, y3, Verstärkerstufe x1, x2, x3 und dem Schaltrelais K1, K2, K3 für das jeweilige Förderorgan F1, F2, F3.

In den Signalformungsstufen e1, e2, e3 wird das zugeordnete Signal S1, S2, S3 als solches erkannt, stabilisiert und in einem Anzeigegerät sichtbar gemacht. Um Fehlschaltungen zu vermeiden, werden nur Potentialänderungen, das heißt Spannungsänderungen, in einer bestimmten Größenordnung als Signal akzeptiert.

Die Zeitstufen t1, t2, t3 bewirken eine individuell einstellbare Ein- oder Ausschaltverzögerung. Dadurch wird für stabile Ein- und Ausschaltvorgänge gesorgt.

Nach der Verzögerung wird das jeweilige Signal an die Logikstufe 1 1, 1 2, 1 3 weitergeleitet. Die Logikstufe erkennt ein Signal nur an, wenn es eine bestimmte Zeit als Potentialänderung Bestand hat.

In den Signalverknüpfungsstufen y1, y2, y3 erfolgt die logische Verknüpfung der Signale S1, S2, S3, die an den Verriegelungsschaltungen Z1, Z2, Z3 anstehen, damit das jeweils erforderliche Förderorgan F1, F2 oder F3 zu- oder abgeschaltet werden kann. Die Signalverknüpfungsstufen y1, y2, y3 der einzelnen Verriegelungsschaltungen Z1, Z2, Z3 sind jeweils so miteinander verknüpft, daß sie als eine Auswerteeinheit ae des Schaltsystems angesehen werden können.

Das Signal zum Zu- oder Abschalten eines Förderorgans, das von der Auswerteeinheit ae erzeugt wird, wird in der Verstärkerstufe x1, x2 oder x3 der für das angesteuerte Förderorgan F1, F2 oder F3 zuständigen Verriegelungsschaltung Z1, Z2 oder Z3 zum Schalten des Relais K1, K2 oder K3 verstärkt. An den Klemmen 11, 12 und 13 liegt das Signal zum Ein- oder Ausschalten der Förderorgane F1, F2 und F3 an. Die Klemme 10 dient der Zuleitung des Schaltstroms.

Sind mehr als drei Förderorgane hintereinandergeschaltet, kann ein weiteres Schaltsystem, beispielsweise ebenfalls aus drei Verriegelungsschaltungen aufgebaut, angeschlossen werden. An den vorgesehenen Klemmen werden die Signalgeber und die Förderorgane angeschlossen. Sind mehr Verriegelungsschaltungen vorhanden als Förderorgane, werden die vorgesehenen Klemmen nicht belegt. Untereinander werden die Schaltsysteme über die Klemmen 4, 5, 8, oder 6, 7, 8, miteinander verbunden. Werden die Förderorgane den vorhandenen Förderorganen, in Förderrichtung gesehen, nachgeschaltet, wird das vorhandene Schaltsystem über die Klemmen 6, 7, 8 mit den Klemmen 4, 5, 8, des nachfolgenden Schaltsystems verbunden, ansonsten erfolgt bei einer Vorschaltung der Förderorgane der Anschluß des neuen Schaltsystems an dem vorhandenen an den Klemmen 4, 5, 8. Wie ersichtlich, sind bei den Schaltsystemen die Auswerteeinheiten ae miteinander verbunden. An den Klemmen 8 liegt die interne Stromversorgung.

Die Funktionsweise des Schaltsystems läßt sich am besten erklären, wenn angenommen wird, die drei hintereinandergeschalteten Förderorgane F1, F2, F3 seien Bunkerabzugsrinnen.

Der Bunker ist zunächst gefüllt. Zur Entleerung wird nun die Bunkerabzugsrinne F1 in Betrieb genommen und fördert das auf ihr liegende Gut ab, das aus dem Bunkeroberteil nachrutscht. Ist nun alles auf der Rinne F1 liegende Gut bis auf einen als Schutzschicht dienenden Rest abgefördert, meldet dies der Signalgeber V1 an der Rinne F1 dem Schaltsystem. Das Schaltsystem schaltet daraufhin automatisch die nachfolgende Bunkerabzugsrinne F2 ein. Diese gibt ihr Gut auf die weiterlaufende Rinne F1. Ist das Gut auf der Rinne F2 ebenfalls bis auf eine Schutzschichthöhe abgesunken, wird das von dem Signalgeber V2 an der Rinne F2 dem Schaltsystem gemeldet, das automatisch die Bunkerabzugsrinne F3 zuschaltet. Ist der Bunker völlig geleert, meldet der Signalgeber V3 von F3 dieses dem Schaltsystem, das daraufhin sämtliche Rinnen F1, F2, F3 abschaltet. Die Rinnen F1, F2, F3 werden erst wieder eingeschaltet, wenn der Bunker gefüllt ist.

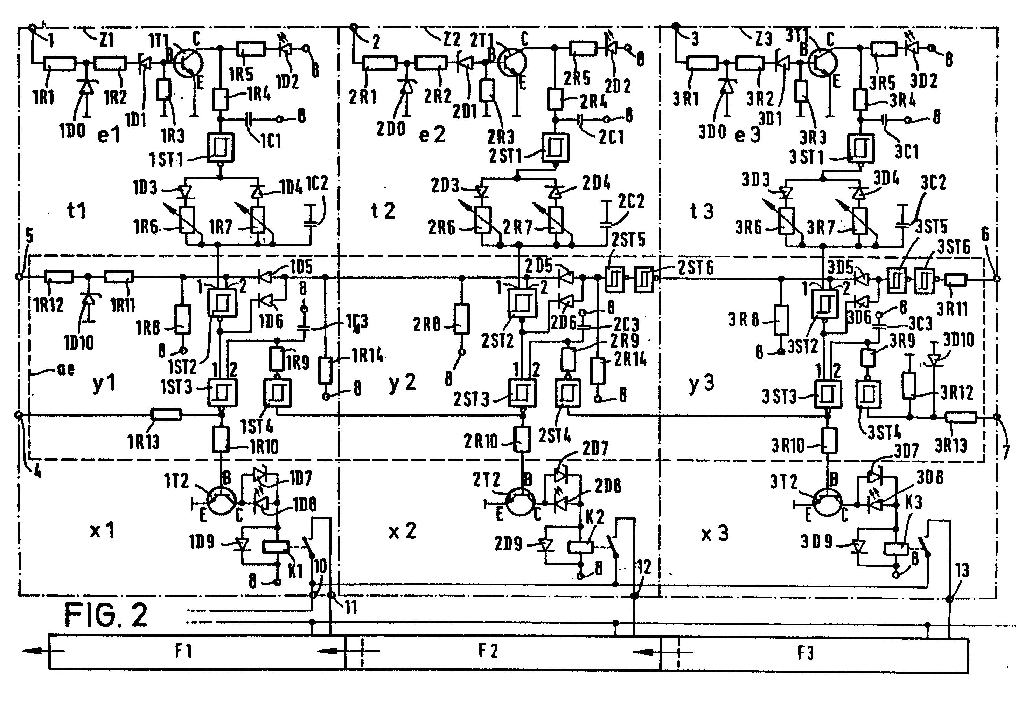

Fig. 2 zeigt die Anordnung der einzelnen Elemente in dem in Fig. 1 dargestellten Schaltsystem. Zum besseren Verständnis der Schaltung sind die Förderorgane F1, F2, F3 ebenfalls dargestellt. Die zugehörigen Signalgeber V1, V2, V3 sind nicht dargestellt. Analog Figur 1 ist aber Signalgeber V1 an Klemme 1, Signalgeber V2 an Klemme 2 und Signalgeber V3 an Klemme 3 angeschlossen. Signal S1 des Signalgebers V1 liegt also an Klemme 1 der Verriegelungsschaltung Z1 für das Förderorgan F1, Signal S2 des Signalgebers V2 an Klemme 2 der Verriegelungsschaltung Z2 für das Förderorgan F2, Signal S3 des Signalgebers V3 an Klemme 3 der Verriegelungsschaltung Z3 des Förderorgans F3.

Beispielhaft für den Aufbau einer Verriegelungsschaltung werden die Elemente der Verriegelungsschaltung Z1 für das Förderorgan F1 beschrieben. Die aufgeführten Elemente sind in den anderen Verriegelungsschaltungen Z2 und Z3 identisch und zur entsprechenden Identifizierung gleichlautend beziffert bis auf die vorangestellte Zählziffer, die die Zugehörigkeit zur jeweiligen Verriegelungsschaltung angibt.

Die Signalformungsstufe e1 enthält als wichtigstes Element zwei Z-Dioden 1D0 und 1D1 als Schutzbeschaltung gegen Überspannungen. Den Schaltvorgang leitet ein NPN-Transistor 1T1 ein, wobei der Schaltvorgang über den Kondensator 1C1 stabilisiert und mit der Leuchtdiode 1D2 angezeigt wird. Das NOT-Glied 1ST1 sichert die Eindeutigkeit des Signals. 1R1, 1R2, 1R3, 1R4 und 1R5 sind Widerstände.

Die Zeitstufe t1 besteht aus zwei parallel geschalteten Potentiometern 1R6 und 1R7, wobei aufgrund der gegensinnigen Schaltung der Halbleiterdioden 1D3 und 1D4 der Widerstand 1R6 zur Einschaltverzögerung und der Widerstand 1R7 zur Ausschaltverzögerung dient. 1C2 ist eine über die Widerstände aufzuladender Kondensator.

Als Logikstufe 1 1 ist die Eingangsstufe des NAND-Gliedes 1ST2 anzusehen. Sie ist deshalb im Schaltplan nicht explizit angeführt. Sinkt die Signalspannung vor Ablauf der in der Zeitstufe t1 eingestellten Verzögerung auf ein niedrigeres Potential zurück, weil der Kondensator 1C2 nicht aufgeladen wird, schaltet das NAND-Glied 1ST2 nicht durch, ansonsten wird das Signal der Signalverknüpfungsstufe y1 weitergemeldet.

Die Signalverknüpfungsstufe y1 enthält als wichtigste Elemente die beiden Halbleiterdioden 1D5 und 1D6 als Sperrdioden, die Ausgangsstufe des NAND-Gliedes 1ST2, das NAND-Glied 1ST3 und das NOT-Glied 1ST4. Über die Klemme 5 wird der Signalstatus der vorhergehenden Verriegelungsschaltung gemeldet und auf den Eingang 2 des NAND-Gliedes 1ST2 gelegt. Die Sperrdioden 1DS und 1D6 bewirken aufgrund ihrer Sperrwirkung, daß eine Potentialänderung immer nur von der in der Zählfolge der Schaltungen nachfolgenden Verriegelungsschaltung ausgehend zur vorhergehenden hin erfolgt. Ober das NOT-Glied 1ST4 erfolgt die Rückmeldung des Signalstatus der nachfolgenden Signalverknüpfungsstufe y2 an die vorhergehende y1. Das NAND-Glied 1ST3 verknüpft dieses Signal mit dem Signal des NAND-Gliedes 1ST2, woraus sich aufgrund des booleschen Gesetzes das Schaltsignal für das Förderorgan F1 ergibt. 1R8 bis 1R14 sind Widerstände, wobei 1R13 sowie 1R11 und 1R12 in Verbindung mit der Z-Diode 1D10 der Schutzbeschaltung dienen.

Über die Anschlußklemme 4 wird das Schaltsignal für das Förderorgan F1 von der Signalverknüpfungsstufe y1 der vorhergehenden Signalverknüpfungsstufe gemeldet, falls ein weiteres Schaltsystem angeschlossen ist. Der Kondensator 1C3 dient der Potentialstabilisierung des Signals, das über das NOT-Glied 1ST4 am Eingang 2 des NAND-Gliedes 1ST3 anliegt.

In der Verstärkerstufe x1 wird das Ausgangssignal des NAND-Gliedes 1ST3 durch den NPN-Transistor 1T2 zum Schaltsignal für das Relais K1 verstärkt, das den an den Klemmen 10 und 11 anliegenden Stromkreis für den Förderer F1 schließt. Die Leuchtdiode 1D8 zeigt den jeweiligen Signalstatus an. Die Diode 1D7 ist eine Schutzdiode gegen Spannungsspitzen, die Diode 1D9 eine Freilaufdiode, die Spannungsspitzen während des Ausschaltvorganges verhindert.

In der gleichen Art ist die Verriegelungsschaltung Z2 des zweiten Förderorgans aufgebaut. Die weiteren Bauteile, die nicht in der Beschreibung aufgeführt sind, dienen als Schutzbeschaltung beziehungsweise zur Spannungs- und Signalstabilisierung, so die NOT-Glieder 2ST5, 2ST6, 3ST5, 3ST6, die Z-Diode 3D10 und die Widerstände 3R11 und 3R12.

Der Signalfluß in der erfindungsgemäßen Schaltvorrichtung läßt sich anhand des Schaltbildes der Fig. 2 erläutern. Dazu wird wiederum angenommen, die drei Förderorgane seien hintereinandergeschaltete Schwingförderrinnen als Abzugssystem eines Bunkers. Ist der Bunker vollständig gefüllt, melden alle drei Signalgeber V1 bis V3 das gleiche Signal S1, S2, S3 (Fig. 1), das an den entsprechenden Klemmen 1 bis 3 der jeweiligen Verriegelungsschaltungen Z1 bis Z3 anliegt. Der Signalstatus "Schwingförderrinne belastet" soll als High-Potential, der Signalstatus "Schwingförderrinne leer" als Low-Potential bezeichnet werden. Im Falle eines gefüllten Bunkers melden alle Signalgeber ein High-Potential. Beispielhaft wird der Signalfluß in der Verriegelungsschaltung Z1 beschrieben.

Der zulässige Signalspannungsbereich wird in der Signalformungsstufe e1 durch folgende Elemente eingegrenzt: Die Widerstände 1R1, 1R2 und die Dioden 1D0 und 1D1 Der Transistor 1D1 schaltet erst bei einem bestimmten High-Potential des Signals durch. Dann liegt High-Potential an der Basis B des Transistors 1T1 an und Strom fließt von der internen Stromversorgung 8 über die Leuchtdiode 1D2, die den Signalstatus High-Potential anzeigt, den Widerstand 1R5 und vom Kollektor C zum Emitter E des Transistors 1D1. Am Kollektor C liegt Low-Potential an. Der Kondensator 1C1 entlädt sich. Über den Kondensator 1C1 können kurzfristige Spannungsschwankungen, vor allem im Grenzbereich des Schaltens, ausgeglichen werden. Erst wenn der Kondensator 1C1 nicht mehr aufgeladen wird, schaltet das NOT-Glied 1ST1 und an seinem Ausgang liegt ein High-Potential.

In der Zeitstufe t1 wird der Kondensator 1C2 über die Diode 1D3 und das Potentiometer 1R6 aufgeladen. Durch den Widerstand 1R6 wird der Aufladestrom begrenzt und damit auch die Aufladezeit. Der Widerstand kann manuell in vorgegebenen Grenzen verändert werden, daß die Aufladezeit und damit die Verzögerungszeit beispielsweise im Bereich von 5 bis 30 sec variiert werden kann. Wenn das Potential, auf das der Kondensator 1C2 aufgeladen worden ist, dem Potential entspricht, das das NAND-Glied 1ST2 als High-Potential erkennt, schaltet das NAND-Glied 1ST2 durch.

In der Signalverknüpfungsstufe y1 liegt am Eingang 1 des NAND-Gliedes 1ST2 ein High-Potential. Eingang 2 ist mit der Klemme 5 verbunden. Ist Klemme 5 nicht mit der Klemme 6 einer vorhergehenden Signalverknüpfungsstufe verbunden und auch nicht gegen ein Low-Potential geschaltet, liegt über den Widerstand 1R8 von der internen Strohmversorgung 8 am Eingang 2 von 1ST2 ein High-Potential an. Die Diode 1D5 sperrt den Signalpfad zur Signalverknüpfungsstufe y2. Durch die Verknüpfung von zwei High-Potentialen liegt aufgrund der booleschen Gesetze am Ausgang von 1ST2 ein Low-Potential an. Dadurch fließt über den Widerstand 1R14 von 8 ein Strom über die Sperrdiode 1D6 und bewirkt, daß am Eingang 2 von 2ST2 der nachfolgenden Signalverknüpfungsstufe y2 ein Low-Potential anliegt. Das NAND-Glied 1ST2 ist mit dem Eingang 1 des NAND-Gliedes 1ST3 verbunden, so daß an diesem Eingang ebenfalls ein Low-Potential anliegt. Der Eingang 2 von 1ST3 ist über das NOT-Glied 1ST4 mit dem Ausgang des NAND-Gliedes 2ST3 verbunden. Da an den Eingängen 2 und 3 der Verriegelungsschaltungen Z2 und Z3 ein High-Potential anliegt und da Eingang 6 und 7 nicht beschaltet sind, was das Anliegen eines Low-Potentials bedeutet, liegt nach Verknüpfung der Signale am Eingang vom NOT-Glied 1ST4 ebenfalls ein Low-Potential an, an seinem Ausgang also ein High-Potential. Am Eingang 2 des NAND-Gliedes 1ST3 liegt also ein High-Potential an. Die Kombination der beiden unterschiedlichen Potentiale ergibt am Ausgang von 1ST3 ein High-Potential.

Dieses High-Potential liegt am Ausgang 4 an und an der Basis des Transistors 1T2 in der Verstärkerstufe x1. Der Transistor 1T2 schaltet durch und an seinem Kollektor C liegt ein Low-Potential. Es fließt ein Strom von 8 über das Schaltrelais K1 und die Leuchtdiode 1D8, die den Schaltzustand anzeigt, zum Kollektor C. Das Relais K1 zieht an und schaltet über die Ausgänge 10 und 11 die Schwingförderrinne F1 ein.

Da an den Klemmen 2 und 3 der beiden anderen Verriegelungsschaltungen Z2 und Z3 ein High-Potential und an den Eingängen 2 der NAND-Glieder 2ST2 und 2ST3 jeweils ein Low-Potential anliegt, liegt auch an- der Basis B der Transistoren 2T2 und 3T2 ein Low-Potential an. Die Schwingförderrinnen F2 und F3 sind abgeschaltet.

Meldet der Signalgeber der ersten Schwingförderrinne F1 "Schwingförderrinne leer", liegt an der Klemme 1 ein Low-Potential an. Damit liegt am Eingang 1 des NAND-Gliedes 1ST2 ebenfalls ein Low-Potential an. Verknüpft mit dem High-Potential des Eingangs 2 ergibt sich am Ausgang von 1ST2 ein High-Potential.

An den Eingängen 1 und 2 des NAND-Gliedes 1ST3 liegen jeweils High-Potentiale an, wodurch aufgrund der Verknüpfung zum Low-Potential die Schwingförderrinne F1 abgeschaltet werden müßte. Da aber der Stromfluß von 8 über den Widerstand 1R14 und über die Diode 1D6 gestoppt wird, wechselt am Eingang 2 des NAND-Gliedes 2ST2 der Signalverknüpfungsstufe y2 das Potential auf High und liegt am Ausgang von 2ST2 ein Potential von Low an. An den Eingängen des NAND-Gliedes 2ST3 liegen nun jeweils ein Low- und ein High-Potential an, die zu einem High-Potential verknüpft werden, das zum einen über den Transistor 2T2 mit Hilfe des Relais K2 das Einschalten der Schwingförderrinne F2 bewirkt und zum anderen gleichzeitig am NOT-Glied 1ST4 anliegt. Umgewandelt zum Low-Potential bewirkt die Verknüpfung mit dem High-Potential durch das NAND-Glied 1ST3 ein High-Potential an der Basis B des Transistors 1T2, der damit den Einschaltvorgang aufrechterhält.

Die hintereinandergeschalteten Schwingförderrinnen werden erst abgeschaltet, wenn der Signalgeber der letzten Schwingförderrinne F3 endgültig ein Low-Potential meldet. Durch die Verknüpfung zweier Low-Potentiale in dem NAND-Glied 3ST2 und zweier High-Potentiale im NAND-Glied 3ST3 wird die Schwingförderrinne F3 abgeschaltet. Das von der Signalverknüpfungsstufe y3 gemeldete Low-Potential bewirkt durch die Umwandlung im NOT-Glied 2ST4 in ein High-Potential und der anschließenden Verknüpfung mit dem am NAND-Glied 2ST3 anliegenden High-Potential ein Abschalten der vorhergehenden Schwingförderrinne F2. Das Abschalten der Schwingförderrinne F2 bewirkt durch die Signalverknüpfung ein Abschalten der abfördernden Schwingförderrinne F1. Damit stehen sämtliche Schwingförderrinnen F1 bis F3 still.

## Patentansprüche

1. Schaltsystem zum selbsttätigen Zu- und Abschalten von mehreren hintereinandergeschalteten, einen Förderstrang bildenden Förderorganen (F1, F2, F3) insbesondere Bunkerabzugsrinnen, die mit materialflußüberwachenden Signalgebern (V1, V2, V3) ausgerüstet sind, die mit untereinander verknüpften, den jeweiligen Förderorganen zugeordneten Verriegelungsschaltungen (Z1, Z2, Z3) verbunden sind, die im wesentlichen aus binären Elementargliedern bestehen, dadurch gekennzeichnet, daß der dem jeweiligen Förderorgan (F1, F2, F3) zugeordnete Signalgeber (V1, V2, V3) mit einer Signalformungsstufe (e1, e2, e3) der jeweiligen Verriegelungsschaltung (Z1, Z2, Z3) verbunden ist, wobei einer Signalformungsstufe (e1, e2, e3) eine Zeitstufe (t1, t2, t3) nachgeschaltet ist, die ihrerseits wiederum über eine Logikstufe (1 1, 1 2, 1 3) mit einer Signalverknüpfungsstufe (y1, y2, y3) verbunden ist, die über eine Verstärkerstufe (x1, x2, x3) mit dem Schaltrelais (K1, K2, K3) des jeweiligen Förderorgans (F1, F2, F3) und mit der Signalverknüpfungsstufe der Verriegelungsschaltung des jeweils zu- und abfördernden Förderorgans in Verbindung steht.

2. Schaltsystem nach Anspruch 1, gekennzeichnet durch wenigstens zwei, vorzugsweise drei miteinander verknüpfte Verriegelungsschaltungen (Z1, Z2, Z3).

3. Schaltsystem nach Anspruch 1 oder 2, dadurch gekennzeichnet, daß die binären Elementarglieder aus NOT-Gliedern (1ST1, 2ST1, 3ST1, 1ST4, 2ST4, 3ST4) und NAND-Gliedern (1ST2, 2ST2, 3ST2, 1ST3, 2ST3, 3ST3) bestehen.

## Claims

1. A switching system for the automatic switching on and or off of a plurality of conveying elements (F1, F2, F3) connected one after the other, forming a conveyor drive, particularly bunker discharge channels, which are equipped with signal transmitters (V1, V2, V3) monitoring the material flow, which signal transmitters are connected to mutually connected, interlocking switching systems (Z1, Z2, Z3) associated with the particular conveying elements, which interlocking switching systems substantially consist of binary elemental members, characterized in that the signal transmitter (V1, V2, V3) associated with the particular conveying elements (F1, F2, F3) is connected to a signal forming stage (e1, e2, e3) of the particular interlocking switching system (Z1, Z2, Z3), a time stage (t1, t2, t3) being connected downstream of a signal forming stage (e1, e2, e3) which time stage is again connected via a logic stage (1 1, 1 2, 1 3) to a signal linking stage (y1, y2, y3) which linking stage is in connection via an amplifier stage (x1, x2, x3) with the switching relay (K1, K2, K3) of the particular conveying elements (F1, F2, F3) and with the signal connecting stage of the interlocking switching system of the conveying element conveying to or away as the case may be.

2. A switching system according to Claim 1, characterized by at least two, preferably three, interlocking switch systems (Z1, Z2, Z3) connected to each other.

3. A switching system according to Claim 1 or 2, characterized in that the binary elemental members consist of NOT-elements (1ST1, 2ST1, 3ST1, 1ST4, 2ST4, 3ST4) and NAND-elements (1ST2, 2ST2, 3ST2, 1ST3, 2ST3, 3ST3).

## Revendications

1. Système de commande pour enclencher et arrêter automatiquement plusieurs organes transporteurs (F1, F2, F3), commandés l'un après l'autre et formant une chaîne transporteuse, notamment des goulottes de décharge de trémies, qui sont équipés de générateurs de signaux (V1, V2, V3) contrôlant le flux de matière et qui sont reliés avec des circuits de verrouillage (Z1, Z2, Z3) associés aux organes transporteurs correspondants, disposés en combinaison mutuelle et qui se composent dans l'essentiel d'organes élémentaires binaires, caractérisé en ce que le générateur de signaux (V1, V2, V3), associé à l'organe transporteur correspondant (F1, F2, F3), est relié à un étage de conformation de signaux (e1, e2, e3) du circuit de verrouillage correspondant (Z1, Z2, Z3) et il est prévu en série avec un étage de conformation de signaux (e1, e2, e3) un étage de temporisation (t1, t2, t3), qui est relié à son tour par l'intermédiaire d'un étage logique (1 1, 1 2, 1 3), avec un étage de combinaison de signaux (y1, y2, y3), qui est lui-même relié par l'intermédiaire d'un étage amplificateur (x1, x2, x3) avec le relais de commande (K1, K2, K3 ) de l'organe transporteur correspondant (F1, F2, F3) ainsi qu'avec l'étage de combinaison de signaux du circuit de verrouillage de l'organe transporteur respectivement à enclencher et à arrêter.

2. Système de commande selon la revendication 1, caractérisé par au moins deux, de préférence trois, circuits de verrouillage (Z1, Z2, Z3 ) opérant en combinaison mutuelle.

3. Système de commande selon la revendication 1 ou 2, caractérisé en ce que les organes élémentaires binaires se composent de portes-NON (1ST1, 2ST1, 3ST1, 1ST4, 2ST4, 3ST4) et de portes-NON ET (1ST2, 2ST2, 3ST2, 1ST3, 2ST3, 3ST3).

FIG. 1

FIG. 2

0 171 557